# EUROPEAN PATENT SPECIFICATION

(11) **EP 2 328 967 B1**
(45) Date of publication and mention of the grant of the patent: **24.09.2014**
(21) Application number: 09777949.0
(22) Date of filing: 18.08.2009
(51) Int. Cl.: C08K 13/02

(54) **AQUEOUS RESIN COMPOSITION FOR MINERAL WOOL PRODUCTS**
WÄSSERIGE BINDEMITTEL FÜR MINERALWOLLPRODUKTE
COMPOSITION AQUEUSE DE RÉSINE POUR PRODUITS DE LAINE MINÉRALE

(30) Priority: 29.08.2008 DE 102008044999
(43) Date of publication of application: 08.06.2011
(73) Proprietor: Saint-Gobain Isover, 92400 Courbevoie (FR)
(72) Inventor: HÜNIG, Hagen, 69221 Dossenheim (DE)
(74) Representative: Winter, Brandl, Fürniss, Hübner, Röss, Kaiser, Polte - Partnerschaft mbB
(86) International application number: PCT/EP2009/005983
(87) International publication number: WO 2010/022876

(56) References cited:
- EP-A- 1 522 532
- US-A- 3 403 069
- US-A- 5 345 001

## Description

The present invention relates to compositions according to claim 1 and 4, as well as to a mineral wool product according to claim 10 containing this composition as binder.

In the manufacture of bound mineral wool products from a molten glass or mineral material it has for a long time been accepted practice to apply, following fiberization of the molten material, a binder on the basis of phenol formaldehyde resin on the fibres while they are still hot. According to the state of the art, such basic resins are quite easily available in concentrations of 1:2 to 1:4 by means of alkaline condensation of phenol with formaldehyde. Conventionally, sodium hydroxide is used as base for the catalyst. However, there are also variations of preparation known, with strong non-nucleophilic amino bases, such as triethanolamine, or with potassium or alkaline earth hydroxides. In order to improve the stability, especially however, in order to suppress the reaction of the phenolate with atmospheric oxygen, these condensates are neutralized with a mineral acid subsequently to synthesis. Mostly, sulfuric acid is used here. Depending on the kind of catalyst and method of neutralization, these resins generally comprise from 1.5 to 3.5 % by weight of inorganic salts in relation to the solution's total mass. This preparation preferably is introduced into the production process, subsequently to fiberization, in the chute e.g. in accordance with the blast drawing process according to DE 35 09 426 A1.

Here, a phenol formaldehyde resin, being the best-known binder of the prior art, is preferably sprayed onto the fibres in the form of an aqueous solution, or dispersion, wherein the phenol formaldehyde resin then begins to polymerize on the fibre surface owing to the still relatively high temperatures of the fibres, and connects the single fibres with each other as a result of the polymerization process, particularly at crossing points of fibres, inasmuch as the fibres lying on top of each other at a crossing point are more or less embedded there by solidified droplets of resin, and, thus, the relative mobility of the single fibres is initially impeded and later on entirely prevented upon curing by means of hot gases, for instance inside a tunnel furnace.

A like binder is described, e.g., in US 3,231,349.

Furthermore, it has been known for a long time from the prior art that the addition of acid, inorganic salts in combination with an amino base can be used advantageously in order to accelerate the reaction in the preparation process. The ammonia / ammonium sulfate system is the most conventional one. Additionally, there are variations of binders known in which ammonia was replaced by an alkanolamine. The curing reaction is of the polycondensation type accelerated by an acid. In the ammonia / ammonium sulfate system, the sulfuric acid release takes place by means of the reaction of ammonia and ammonium, respectively, in balance with ammonia and formaldehyde. Correspondingly, this curing system is largely ineffective in binder systems which contain very little or non formaldehyde. Additionally, there are variations of binders known where ammonia was replaced by salts of amidosulfuric acids. On principle, phosphoric acid salts are usable as well, whereas salts of halo acids are rather unusual due to their corrosiveness and the danger of emission of halogen, halogenated compounds or hydrogen halides. All the types of this curing accelerator/decelerator system have in common that they release a very strong inorganic acid and, furthermore, can release ammonia via intermediate products, as they usually are ammonium salts. Another disadvantage is the fact that, in addition to an uncontrolled accelerated reaction, inorganic salts are present in the plastic after termination of the curing process. It is true that the most conventional phenol formaldehyde urea resins tolerate a certain salt content, however, depending on the type of resin, if the ash proportion is from 1.5 - 3.5 % by weight, the plastic's water resistance is considerably decreased, this limiting the addition of inorganic curing accelerators/decelerators, as a certain salt concentration is already present after the synthesis of the phenol formaldehyde resin due to the neutralization thereof. Additionally, there are two further effects caused by a high salt content of inorganic salts. On the one hand, inorganic salts generally are solid matter, on the other hand, these salts are still present in the plastic in appreciable amounts which are easily detected and, due to their affinity to components of the glass, for example of calcium, they cause the formation of inactive barrier layers between glass and plastic which additionally facilitate the migration of water between glass and plastic. After spraying the strongly diluted binder solution to the very hot glass fibre and evaporation of the water to a large extend, the former effect causes a pre-curing by means of the formation of crystals of the inorganic salts, this leading to considerably decreased creep properties of the not yet cured plastic. Minor inhomogenities of the distributed binder solution persist, this being not uncommon in large-scale processes. Thus, the same stability of a completely homogenous material can only be achieved by means of an increased proportion of plastics. Additionally, the crystallites have a negative effect on the structure of the plastic and decrease its stability, so that a higher amount of binder has to be used. The second effect, the formation of barrier layers, leads to a decreased wet strength of the finished product. Generally, the use of inorganic salts for accelerating the curing in a combination with ammonia leads, thus, to additional expenses regarding binder plastics and, thus, also to an increase of emissions during the preparation process as well as with the finished product.

For reasons of protection of the environment as well as for reasons of workplace safety, more and more attempts are meanwhile being undertaken to replace the conventional phenolic resin binders with alternative, formaldehyde-free binders because of their formaldehyde content and their formaldehyde emission, or at least to reduce the concentration of free formaldehyde.

Thus, for example DE 10 2005 056 791 A1 describes a curable, formaldehyde-free aqueous binder composition for mineral wool on the basis of polymeric polycarboxylic acids.

In addition, DE 10 2005 056 792 A1 describes a virtually formaldehyde-free binder composition on the basis of conventional phenol formaldehyde resins.

However, it turned out that a considerable improvement of the emission situation is possible by improving the conventional binders, as described herein. Due to the improved stability values of the plastic itself and its improved binding to glass, it is possible to use considerably less amounts of conventional phenol formaldehyde urea resins without decreasing stability values and aging resistance. It was frequently found out that the stability was still higher than with the conventional system, even if a reduced amount was used.

In addition, US 3,403,069 discloses a web of glass-filament bundles which is passed under even tension through a bath of thermosetting phenol-formaldehyde resin. The resin had been prepared from 1.5 mols of formaldehyde per mol of phenol, using about 0,5% by weight NaOH as catalyst. A mixture of theses ingredients had been reacted until the resin had a viscosity of about 500-1000 centipoises at 80°C, whereupon the mixture was neutralized with an acid such as citric acid.

Moreover, DE 36 16 454 A1, for example, describes aqueous emulsions of a water-insoluble additive serving as oiling for impregnating the insulating materials consisting of mineral fibers.

In order to improve their handling properties, insulating materials consisting of mineral fibres are impregnated with additives such as, for example, dust binders, water repellants, smoothing and lubricant agents as well as other additives. Furthermore, plastics in the form of thermocurable duromers as described above are added in order to impart a certain form stability to the bound mineral fibers. In order to achieve an even distribution of these additives throughout the mineral fibres which are further processed in the form of a fibre web, it is frequently necessary for the additives to be incorporated at a stage in the manufacturing process at which the fibres can still be impregnated as individual fibres, in other words before the felted fibre web is formed. This stage in the manufacturing process is in the immediate vicinity of the disaggregating units where, by reason of the proximity of molten glass, high temperatures, intensive radiated heat and the latent risk of fire are present.
Therefore, the additives have to fulfil a number of conditions:
- they must have low inherent volatility;
- they must be water-dilutable;
- they must be processable by spraying, and
- they must not burn when being processed.
In the prior art, these conditions are fulfilled by aqueous emulsions or dispersions of the additives which have the necessary stability regarding the emulsion and dispersion condition, respectively, and which can be diluted to the desired low working concentration by the addition of water.

Typically, the resin binder cured to become a Duroplast is sprayed onto the fibres subsequently to the fiberization of the molten mineral material.

On principle, it is possible to also apply the resin binder onto the mineral wool by means of immersion.

It is well known that this bound mineral wool is used to produce various products for thermal and acoustic insulation for the interior and exterior construction of houses and factories. Products of this sort are mostly available in the form of plates, panels or lamellae and, in addition to their insulation properties, they also have to fulfil the high ageing and fire protection requirements.

The Applicant has developed special products, i.e. laminated or non-laminated mineral wool-based pipe shells that are slotted in the longitudinal direction, for the heat insulation of pipes carrying hot fluids, used for example in power plants or shipbuilding. A typical pipe shell, for example made of ULTIMATE mineral wool, is approx. 1.2 m long, is slotted on one side, and is non-combustible (fire protection classification A1). The heat conductivity of this kind of pipe shell according to EnEV (German Energy Savings Regulations) Lambda R = 0.035 W/(mK) (Z-23.14-1589). Up to an insulation thickness of 80 mm, the classification temperature is 620°C. Such pipe shell insulation elements attained the fire class R30 to R90 rating according to DIN 4102-11. In case of fire, this means that the pipe seal is able to withstand the fire for up to 90 minutes. Furthermore, these pipe shells are explicitly allowed for shipbuilding.

Such pipe shell insulation elements are, for example, already known from the Applicant's DE 27 24 147 C3.

In spite of the fact that the prior art pipe shells are excellent insulation and fire protection elements, it became clear in the framework of ageing tests in extreme conditions in practice that after an extended period under these test conditions, restoration forces in the interior of the mineral wool and degradation of the binder/curing system can cause the assembly slot to gape and lead to the disintegration of pipe insulation shells. In this case, such a damaged insulation element would in practice separate from the pipe to be protected, thus decreasing the insulation properties, as on the one hand the close contact between pipe shell and pipe could get lost and, on the other hand, the assembly slot could open in spite of the coating layer and heat would get lost, or the pipe would heat in an uncontrolled way.

Thus, on the basis of the above mentioned prior art, it is the object of the present invention to provide binder for mineral wool products, in particular pipe shells, which do not or only to a greatly reduced extend show the above mentioned disadvantages of the prior art.

This object is solved by an aqueous resin mixture according to claim 1, as well as by a composition according to claim 4 and by a mineral wool product according to claim 10.

The present invention uses as a component an aqueous resin mixture of phenol-formaldehyde-condensate, at least one alkali and/or alkaline earth hydroxide as well as at least one organic acid, selected from the group consisting of: C2 to C8-hydroxycarboxylic acids, in particular glycolic acid, citric acid, tartaric acid; aryl carboxylic acids with one or two six-membered rings; hydroxyl carboxylic acids with one or two six-membered rings with 1 to 3 OH-groups, in particular salicyclic acid; polymere carboxylic acids, in particular polyacrylic acids having a molecular mass of 500 to 100.000 D; maleic acid-acrylic acid-copolymers, amino carboxylic acids, in particular ethylenediaminetetraacetic acid (EDTA), ethylene glycol bis(2-amino ethylether)-N,N,N',N'-tetraacetic acid (EGTA).

Such a kind of aqueous resin mixture preferably contains urea. For the practice of mineral and glass wool production, the pH of the resin mixture preferably is from 7.0 to 8.5.

The present invention relates to a composition comprising the above resin mixture; at least one reaction retarding organic amine base, and at least one reaction accelerating organic acid, selected from the group consisting of: C2 to C8-hydroxycarboxylic acids, in particular glycolic acid, citric acid, tartaric acid; aryl carboxylic acids with one or two six-membered rings; hydroxyl carboxylic acids with one or two six-membered rings with 1 to 3 OH-groups, in particular salicyclic acid, polymer carboxylic acids, in particular polyacrylic acids having a molecular mass of 500 to 100.000 D; maleic acid-acrylic acid-copolymers, amino carboxylic acids, in particular ethylenediaminetetraacetic acid (EDTA), ethylene glycol bis(2-amino ethylether)-N,N,N',N'-tetraacetic acid (EGTA).

Another composition according to the present invention comprises at least one conventional aqueous resin mixture made of phenol-formaldehyde condensate with at least one alkali and/or alkaline earth hydroxide; at least one reaction retarding amine base; and at least one reaction accelerating organic acid, selected from the group consisting of: C2 to C8-hydroxycarboxylic acids, in particular glycolic acid, citric acid, tartaric acid; aryl carboxylic acids with one or two six-membered rings; hydroxyl carboxylic acids with one or two six-membered rings with 1 to 3 OH-groups, in particular salicyclic acid, polymer carboxylic acids, in particular polyacrylic acids, preferably polyacrylic acids having a molecular mass of 500 to 100.000 D; maleic acid-acrylic acid-copolymers, amino carboxylic acids, in particular ethylenediaminetetraacetic acid (EDTA), ethylene glycol bis(2-amino ethylether)-N,N,N',N'-tetraacetic acid (EGTA).

Furthermore, the invention relates to a mineral wool product bound with a binder comprising the composition according to the present invention.

With the compositions of the present invention, a binder system for mineral wool can be provided which can be regarded as three component system:
1. Resin system
2. Amine base
3. Organic acid

In contrast to the prior art, where sulfuric acid or other mineral acids as well as sulfamic acid are used for neutralization of the alkali or alkaline earth containing phenol formaldehyde resin, at least one organic acid is used in the present invention. This way, the total salt content of the binder and, thus, of the prepared mineral wool product can be significantly lowered, so that the cured binder is not harmfully influenced, especially by the ammonium salts. In this context, the person skilled in the art knows that after curing of a conventionally neutralized binder resin, an ammonium salt concentration of approx. 2 % by weight, relating to the solid amount in the resin, can be contained therein.

If the composition of the present invention, i.e. an organic acid neutralized with an amine base, is used, the thus bound mineral wool product contains only 0.5 % by weight relating to the solid amount in the resin, so that the fire load is not significantly increased, and the salt content does not come even close to the values of the prior art.

A partially neutralized binder concentrate, for example, may exhibit a relation of 2:1 functional groups to amine bases.

During practical tests, a curing system for a phenol-formaldehyde resin from ethanolamine as amine base and glycolic acid as organic acid proved to be especially advantageous.

The use of an organic acid as neutralizer in the binder system can easily be detected because of the extremely reduced sulfate ion concentration.

In an advantageous embodiment of the composition of the present invention the amine base is selected from the group consisting of: Alkanolamines, in particular ethanolamine; as well as an amine compound of the general formula (1): 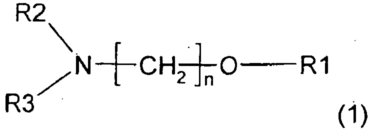 wherein R1, R2 and R3 correspond, independently of one another, equal to or not equal to H and R1, to the general formula (2): 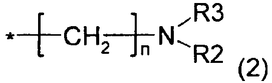 with a value for n of von 2 - 10 and R2 and R3 independently of one another being equal to or not equal to H or correspond to the general formula (3): 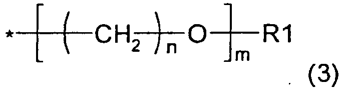 wherein m can be a value of 1 - 50 and the molecular mass of the amino compound does not exceed approx. 20 000 g/mol.

Furthermore, the composition is preferred to additionally contain at least one UV stabilizer, selected from the group consisting of: carboxylic acid amides of carboxylic acids with C2 to C16 alkyls or C5 to C16 cyclo- or heterocycloalkylene, N-aryl substituted carboxylic acid amides with C5 to C6 ring, C1 to C16 N-alkyl substituted carboxylic acid amides, N-cycloalkyl substituted carboxylic acid amides with a C5 to C16-membered ring; radicals of the HALS-or NOR-HALS-type, in particular radicals of triacetonamine, triazines with sterically space consuming substituents, in particular C5 to C6 aryl or C5 to C16 cycloalkyl, t-butyl; C5 to C6 diarylketones; diarylketones of condensated aryl compounds with 2 to 3 rings; as well as mixtures thereof;
or
the UV stabilizer is selected from the group consisting of: 2-(2H-benzotriazol-2-yl)-4-methyl-(n)-dodecylphenol, isomers of 2-(2H-benzotriazol-2-yl)-4-methyl-(n)-tetracosylphenol, isomers of 2-(2H-benzotriazol-2-yl)-4-methyl-(n)-didodecylphenol (n = 5 or 6); 2,2,4,4-tetramethyl-2-oxa-3,20-diazadispiro-(5.1.11.2)-heneicosan-21-on; and 2-hydroxy-4-n-octoxy-benzophenone; as well as mixtures thereof.

The composition according to the present invention is particularly important if it is used as binder for mineral wool or glass fibres, in particular non-woven glass. However, it can also be used as binder for ceramic powders, fibre-reinforced products, in particular brake pads or abrasives.

A preferred composition comprises a phenol-formaldehyde resin comprising more than 0.2 % by weight of free formaldehyde.

The composition of the present invention is preferably used as binder for the production of formed and/or spike wound pipe insulation shells, in particular those slotted in longitudinal direction. In this mineral wool product, the extraordinary ageing resistance and the mechanical properties of the binder composition have a great effect, as, for example, the restoring forces of the pipe shells are still controlled after massive ageing in such a way that the longitudinal slot does not or barely gape.

As reaction retarding amine compound, i.e. one which delays the curing/completion of the polymerization of the phenol formaldehyde resin, one of the general formula (1) is particularly suitable for the purposes of the present invention: 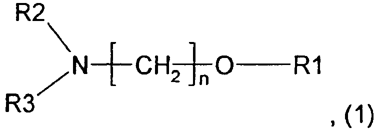 wherein R1, R2 and R3 are independently of one another equal or not equal to H and R1, to the general formula (2): 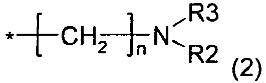 with a value for n of von 2 - 10 and R2 and R3 independently of one another being equal to or not equal to H or correspond to the general formula (3): 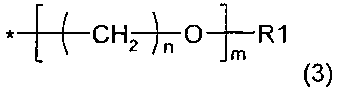 , wherein m can be a value of 1 - 50 and the molecular mass of the amino compound does not exceed approx. 20 000 g/mol.

The delay in the polymerization reaction is advantageous in that not all of the binder polymerizes and cures right after the application in the chute subsequently to the fiberization of the melt, but this takes place later under controlled conditions, for example after the forming of the mineral wool products and/or in the curing oven.

In summary, it is noted that product quality, in particular with respect to an improved ageing resistance, was significantly improved by the composition of the present invention and in particular by the curing system of amine base/organic acid used therein, in particular with coated and non-coated mineral wool pipe insulation shells. Important product properties such as water absorption, chloride content or fire classification are not influenced by the use of the composition of the present invention.

Furthermore, the binder compositions according to the present invention allow for the achievement of the same stability as in the prior art with less binder plastic. Therefore, the emission situation is positively affected during the preparation process as well as in the prepared products.

Further advantages and features of the present invention will become apparent from the description of working examples as well as from the drawing.

It shows:
- Fig. 1: an apparatus for measuring the gel time as well as the geometry of a spatula therefore;
- Fig. 2: a diagram torque in relation to the time for determining the gel time via the amendment of viscosity as well as a diagram of A- and B-time; and
- Fig. 3: a comparison of mineral wool pipe insulation shells prepared with conventional binder and with the binder according to the present invention after ageing text in an autoclave.

### Embodiments

Commercially available sodium catalyzed, neutralized and non-neutralized phenol-formaldehyde resins with the solid and ash content, respectively, mentioned in table 1, were used. Resins 2 and 4 are the non-neutralized form of resins 1 and 3. The solid content was determined by curing/drying a defined amount of the respective analyte for 2h at 150°C. The ash contents were determined by heating a defined amount of the respective cured resin and binder, respectively, at 550°C, until a constant weight was achieved. The ash contents indicated in table 1 were recalculated for the solutions.

**Table 1: basic resins used**

| Resin No. | Solid (%) | Ash content (%) |
|---|---|---|
| 1 | 44 | 1.5 |
| 2 | 44 | 1.1 |
| 3 | 44 | 3.0 |
| 4 | 44 | 1.3 |

For neutralization of resins 2 and 4, the carboxylic acids mentioned in table 2 were used.

**Table 2: carboxylic acids used for neutralization**

| Acid No. | Name | Solid content (%) |
|---|---|---|
| 1 | Hydroxyacetic acid | 70 |
| 2 | Citric acid | ∼ 99* |
| 3 | Polyacrylic acid (∼ 10000 g/mol) | 50 |
| 4 | Polyacrylic acid (∼ 80.000 g/mol) | 50 |

| | | |
|---|---|---|
| *In order to simplify the process, a 100% content was used in the recipes | | |

For neutralization of the basic resins 2 and 4, the following amounts of simple carboxylic acids were used for each 100 kg (table 3). The pH target value was 7.6.

**Table 3: Neutralization of resins 2 and 4 with simple carboxylic acids**

| Basic resin | Number | Acid | Amount (kg) | Solid content after neutralization (%) |
|---|---|---|---|---|
| 2 | 2.1 | 1 | 3.8 | 46.2 |
| 2 | 2.2 | 2 | 1.9 | 45.2 |
| 4 | 4.1 | 1 | 4.5 | 48.1 |
| 4 | 4.2 | 2 | 2.4 | 47.2 |

In concentrated solutions, the use of polymeric carboxylic acids led to two-phase mixtures which quickly become single-phase upon dilution. As the phase of higher density largely consists of the polymeric carboxylic acid and the salts thereof, respectively, in these cases the phase was separated, this leading to an exchange effect. On principle, solid polymeric carboxylic acids or exchange resins can be used for desalting and neutralization, however, due to the kinetic inhibition, it is not possible to adjust the pH value exactly. For the sake of clarity, only the results with the polymeric carboxylic acids solutions are shown (table 4). The data again refer to 100kg of the resin each and a target value of pH 7.6.

**Table 4: Neutralization of resins 2 and 4 with polymeric carboxylic acids**

| Basic resin | Number | Acid | Amount (kg) | Solid content after neutralization (%) |
|---|---|---|---|---|
| 2 | 2.3 | 3 | 4.4 | 44.2 |
| 2 | 2.4 | 4 | 6.4 | 44.6 |
| 4 | 4.3 | 3 | 5.8 | 46.3 |
| 4 | 4.4 | 4 | 8.1 | 45.0 |

By adding solid urea to the basic resins prepared in such a way, they were transferred to the respective resin-urea mixtures (table 5). The data refer to 100kg each of the resin. No water was added to these mixtures as the technical preparations require a cost-effective transport and lowest storage costs. This step was carried out only at the final preparation of the binder.

**Table 5: resin-urea mixtures with the respective basic resins**

| Resin | Premix | Amount of urea (kg) | Solid content (%) |
|---|---|---|---|
| 1 | P1 | 18.9 | 52.9 |
| 2.1 | P2.1 | 19.8 | 55.1 |
| 2.2 | P2.2 | 19.4 | 54.1 |
| 2.3 | P2.3 | 18.9 | 53.1 |
| 2.4 | P2.4 | 19.1 | 53.5 |
| 3 | P3 | 18.9 | 52.9 |
| 4.1 | P4.1 | 20.6 | 57.0 |
| 4.2 | P4.2 | 20.2 | 56.1 |
| 4.3 | P4.3 | 19.8 | 55.2 |
| 4.4 | P4.4 | 19.3 | 53.9 |

Finally, the respective resin-urea mixtures were used to prepare the binder for the corresponding tests. In all cases, the target solid content was 40%. Desalted water was used in order to prevent false measurement results. For illustration purposes, only the results with partially neutralized hydroxyacetic acid in a molar ratio to ethanolamine of 2:1 are shown as unimolar solution regarding the acid. This carboxylic acid solution exhibited a 10.6 % by weight solid content, the pH was 3.4. However, partially neutralized citric acid or partially neutralized polyacrylic acids can smoothly be used as curing catalysts. By changing the molar ratio of organic acid to organic base, in this example ethanolamine, it is possible to adjust almost any pH value in the binder and, thus, conveniently control the reactivity of the preparation.
Binder B1 (reference): 100 kg P1; 1.6 kg ammonium sulfate; 5.1 kg ammonia solution (25 % by weight); 0.2 kg 3-aminopropyltriethoxysilane, 33.0 kg water
Binder B1.1: 100 kg P1; 1.4 kg glycolate solution; 0.2 kg 3-aminopropyltriethoxysilane, 21.4 kg water
Binder B2.1: 100 kg P2.1; 2.6 kg glycolate solution; 0.2 kg 3-aminopropyltriethoxysilane, 36.1 kg water
Binder B2.2: 100 kg P2.2; 2.6 kg glycolate solution; 0.2 kg 3-aminopropyltriethoxysilane, 33.7 kg water
Binder B2.3: 100 kg P2.3; 2.5 kg glycolate solution; 0.2 kg 3-aminopropyltriethoxysilane, 28.4 kg water
Binder B2.4: 100 kg P2.4; 2.5 kg glycolate solution; 0.2 kg 3-aminopropyltriethoxysilane, 32.2 kg water
Binder B3 (reference): 100 kg P3; 0.4 kg ammonium sulfate; 0.9 kg ammonia solution (25 % by weight); 0.2 kg 3-aminopropyltriethoxysilane, 10.6 kg water
Binder B3.1: 100 kg P3; 2.5 kg glycolate solution; 0.21 kg 3-aminopropyltriethoxysilane, 30.7 kg water
Binder B4.1: 100 kg P4.1; 2.7 kg glycolate solution; 0.2 kg 3-aminopropyltriethoxysilane, 40.8 kg water
Binder B4.2: 100 kg P4.2; 2.6 kg glycolate solution; 0.2 kg 3-aminopropyltriethoxysilane, 26.3 kg water
Binder B4.3: 100 kg P4.3; 1.6 kg glycolate solution; 0.2 kg 3-aminopropyltriethoxysilane, 26.3 kg water
Binder B4.4: 100 kg P4.4; 1.6 kg glycolate solution; 0.2 kg 3-aminopropyltriethoxysilane, 23.4 kg water

### Determination of reactivity

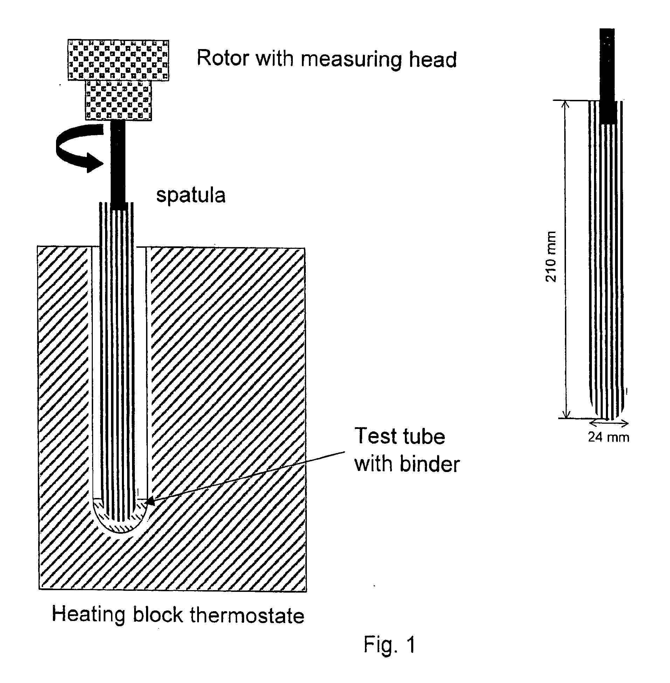

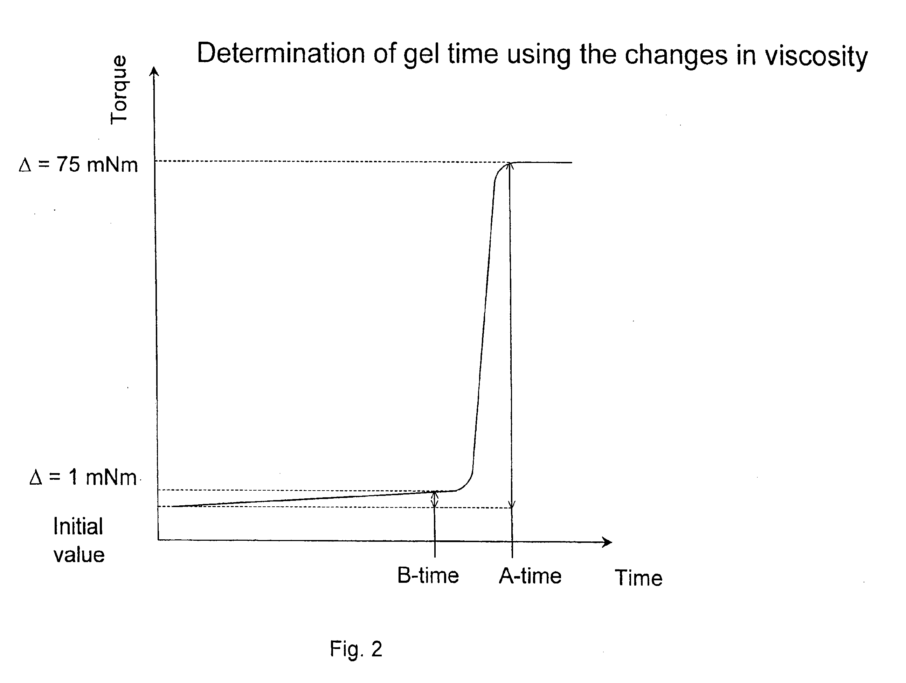

The speed with which a phenol formaldehyde urea resin passes from the liquid to the solid state is essential for those preparations, as it is decisive for further processability. In contrast to normal plastics, the measurement here took place in accordance with DIN 16916, as the plastic formed by reaction can only be removed from the apparatus if the measurement vessel is destroyed. For this purpose, 25g of the 40% binder are introduced into an 30 x 200 mm test tube and moved at 130°C with a spatula of the geometry shown in fig. 1. The spatula is connected to a measuring head measuring the force necessary for the movement. The torque is the measure for the progress of the reaction, wherein the point of time at which it arrives at a value of 1 mNm is regarded as B-time and a value of 75 mNm is regarded as A-time. An apparatus for measuring the gel time as well as the geometry of a spatula which is used in the gel time measurement apparatus, are shown in fig. 1. A diagram for the determination of the gel times via the change of viscosity is shown in Fig. 2. Generally, it has to be noted that the value for the start of the reaction is of great importance as it is decisive for the system's processability in the preparation of mineral wool products. If the value described as B-time (cp. fig. 2) is very short, it is likely that curing prior to shaping has to be anticipated. The value at which the measurement is terminated, is less decisive for the processability. However, if the A-time is shortened (cp. fig. 2), this has the advantage that suddenly higher curing capacities can be run with one and the same system, or, with the same tonnage, the curing temperature can be reduced. The latter possibility is advantageous in that the plastic is considerably less damaged and, additionally, less decomposition products are expelled. It showed in general that a B-time value < 20 min is very disadvantageous for the processing properties. Table 6 indicates the values for the individual binders.

**Table 6: reaction times for the individual binder systems**

| Binder | B-time (min) | A-time (min) |
|---|---|---|
| B1 (standard) | 21.3 | 31.0 |
| B1.1 | 23.5 | 28.8 |
| B2.1 | 24.3 | 29.3 |
| B2.2 | 24.6 | 30.5 |
| B2.3 | 20.5 | 25.2 |
| B2.4 | 20.2 | 25.2 |
| B3 (standard) | 24.3 | 31.8 |
| B3.1 | 23.0 | 28.5 |
| B4.1 | 19.8 | 25.2 |
| B4.2 | 22.2 | 27.6 |
| B4.3 | 23.0 | 28.5 |
| B4.4 | 21.8 | 27.2 |

From table 6 it is clearly to be seen that extensive desalting seems to have a particular positive effect on the reactivity of the phenol formaldehyde resin. In general, nearly unchanged or even extended B-times are noted whereas the A-times were predominantly reduced. However, the reduction of the inorganic salt content has not only positive effects on the reactivity and its controllability, respectively, it also drastically improves the plastic's water resistance. For this purpose, approx. 10g of the respective binder are cured at 130°C. The plastic body is crushed coarsely and dried at 105°C until a constant weight is reached. The thus prepared material is pulverized and one gram each of this powder is boiled in water. The cooled dispersion is filtered off and the solid obtained is weighted after drying at 105°C. Like in the present case, the filtrate can be used for a simple way of ion determination. Table 7 shows the loss in mass of the individual binder systems and the sulfate concentrations measured by means of ion chromatography. Analogously, the extractable salts can be determined in finished products as well. However, it is necessary to enrich them from larger volumes. In this context, it is advantageous to insert the insulation material loosely in a Soxhlet apparatus and cover the outlet with some filter paper. The extract is concentrated and measured directly. In the case of organic acids, the material to be extracted is slightly alkalized after extraction and firstly shaken out with cyclohexane in order to remove oil residues and higher molecular fatty acid residues. Subsequently, it is vacuum concentrated to dry and the residue is dried. In general, this can be determined with the very strong carbonyl bands by means of IR-spectroscopy. In the case of low molecular acids, the residue can also be resolved in dioxane and benzylated after alkalization. The corresponding benzyl ester / benzyl ether can directly be determined by means of GC-MS.

**Table 7: Loss in mass bv dilution in water and parts of sulfate in BM**

| Binder [BM] | Loss in mass (%) | Sulfate (%) |
|---|---|---|
| B1 (standard) | 12 | 1.5 |
| B1.1 | 5 | 0.9 |
| B2.1 | < 1 | n. v.¹⁾ |
| B2.2 | < 1 | n. v. |
| B2.3 | < 1 | n. v. |
| B2.4 | < 1 | n. v. |
| B3 (standard)* | 16 | 3.9 |
| B3.1 | 4 | 3.4 |
| B4.1 | < 1 | n. v. |
| B4.2 | < 1 | n. v. |
| B4.3 | < 1 | n. v. |
| B4.4 | < 1 | n. v. |

| | | |
|---|---|---|
| ¹⁾ n.v.: not verifiable | | |

*If ammonia is replaced by an organic salt in the standard binders, the loss possibly amounts to up to 40%.

In addition to an improved reactivity and an increased water resistance of the plastic, there is also a considerably improved glass-plastic adhesion due to a lower concentration of inorganic salts in the binders. For this purpose, 5 drops of a 20% binder solution of a composition according to EP 1522532A1 are evenly distributed on a circular piece of fire-polished glass. In order to avoid inhomogeneities, the film is at first dried at 50°C and subsequently cured at 150°C for 2h. The coated pieces of glass are stored for 24h in water at 70°C. Subsequently, the surface ratio of the separated plastic is determined. A technically suitable binder advantageously adheres to at least 75% of the surface to the glass after the test. The results are summarized in table 8.

**Table 8: Glass-plastics adhesion of the individual binder alternatives**

| Binder | Separated surface (cm²) | Ratio separated (%) | Note |
|---|---|---|---|
| B1 (standard) | ∼ 4 | 10 | Film is swollen |
| B1.1 | < 1 | < 1 | clear film |
| B2.1 | < 1 | < 1 | clear film |
| B2.2 | < 1 | < 1 | clear film |
| B2.3 | < 1 | < 1 | clear film |
| B2.4 | < 1 | < 1 | clear film |
| B3 (standard) | ∼ 8 | 20 | Film has bubbles and is considerably swollen |
| B3.1 | < 1 | < 1 | clear film |
| B4.1 | < 1 | < 1 | clear film |
| B4.2 | < 1 | < 1 | clear film |
| B4.3 | < 1 | < 1 | clear film |
| B4.4 | < 1 | < 1 | clear film |

The glass-plastics adhesion as well shows that a reduced salt content has a positive effect for the composite system. This is especially drastically visible in the standard binder no. 3.

### Tests with finished products

A board-shaped facade insulation material was prepared with a glass, prepared by centrifugal blowing process, having a target gross density of 20 kg/m³, a target loss due to heating of 6%, and a target thickness of 60 mm. Binder 3 was used as reference and binder 3.1 was used for demonstrating that a small decrease of the salt content already greatly improves the stability before and after artificial ageing. Tensile strength was measured after preparation and climatic treatment for 15 minutes at 105°C in an atmosphere saturated with water vapour. This testing method is also named autoclave test. For this test, the boards were cut into test bodies having a rectangular base of 100 x 200 mm, and clamped into an apparatus suitable for measurement of the tensile strength in such a way that the narrow side is adjusted in direction of tension. In each case, measurement was made in production direction. Table 9 shows the results with the standard product and the test product before and after autoclaving.

**Table 9: Tensile strength for board shaped glass wool product prior to and after climatic treatment**

| Binder | Tensile strength in N prior to autoclave | Tensile strength in N after autoclave | Changes(%) |
|---|---|---|---|
| 3 (reference) | 146.6 | 117.3 | 20.0 |
| 3.1 | 159.4 | 151.4 | 5.0 |

A mineral wool plate was prepared from a glass according to EP 1522532A1 with a target gross density of 90 kg/m³ and 8% target loss due to heating. Binders B1 and B1.1 were used. Laminar plates were cut into 200x200 mm test bodies and 7d were aged at 70°C and a relative air density of 95%. The change in thickness was determined at a pressure of 0.25 kPA, the compression stress was determined at a stress of 10%, and the tearing strength was determined. For the latter, the test bodies were bonded between two steel plates having an identical area and the test bodies thus fixed were torn in a suitable apparatus. The differences, which were considerable, are shown in table 10.

**Table 10: Mechanical properties prior to and after the North Test**

| Type of binder | B1 (reference) | | B1.1 | |
|---|---|---|---|---|
| | prior to North | after North | prior to North | after North |
| Thickness at 0.25 kPa mm | 41.7 | 51.7 | 42.1 | 43.3 |
| Compression strength kPa 10% | 12.0 | 1.0 | 14.1 | 9.6 |
| Tear strength kPa | 3.0 | 0.2 | 2.2 | 1.5 |

A slotted pipe shell was prepared from a glass according to EP 1522532A1 with a target gross density of 75 kg/m³ and a 5% target loss due to heating. The binders B3 and B3.1 were used. In the test product with standard loss due to heating, it was not possible to open the pipe shell at the slot. This is why the binder proportion had to be reduced from 5 to 3 percent by weight. The product was cut into test bodies and the compression stress was determined at 10% stress prior to and after ageing for 15 min at 105°C in water vapour with saturated atmosphere; the thickness was determined as well before and after climatic treatment. The results are shown in table 11.

**Table 11: Mechanical properties prior to and after autoclaving**

| Type of binder | B3 (reference) | | B3.1 | |
|---|---|---|---|---|
| | prior to autoclave | after autoclave | prior to autoclave | after autoclave |
| Thickness at 0.25 kPa mm | 28.6 | 30.0 | 32.5 | 32.8 |
| Compression stress kPa 10% | 10.2 | 8.0 | 16.4 | 12.4 |

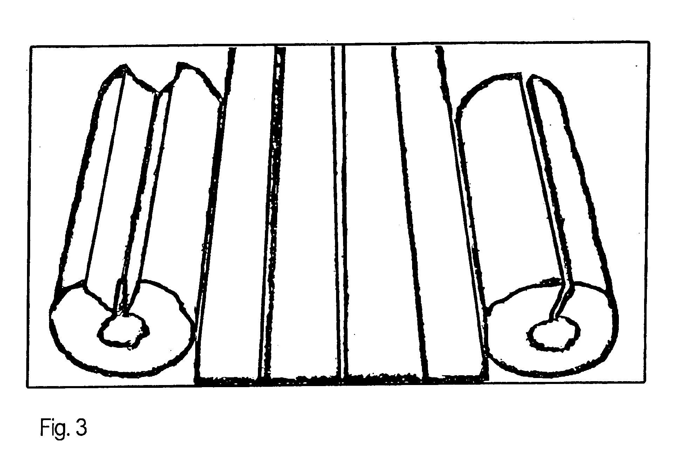

Furthermore, fig. 3 shows pipe shells prior to and after the autoclave test. In fig. 3, the right outer short pipe shell is a pipe shell that existed prior to the autoclave test, which has been bound by a standard phenol-formaldehyde urea binder. The short pipe shell on the outer left side of fig. 3 also has been bound with the standard phenol-formaldehyde urea binder and it is shown after the autoclave test. The longitudinal slot drastically gapes as a result of the artificial ageing in the autoclave, so that a pipe shell introduced, as intended, for heat insulation purposes, would experience a considerable decrease in insulation properties after natural ageing, even in case of an additional coating.

This gaping effect of the longitudinal slot practically does not occur in the pipe shells bound with the binder of the present invention. Fig. 3 shows the artificially autoclave aged as (longer) second pipe shell second from the left. The longitudinal slot is only marginally wider than in a pipe shell prior to artificial ageing (in fig. 3 second pipe shell from the right).

Thus, the mineral wool products bound with the composition according to the present invention, in particular pipe insulation shells, keep their complete heat insulation properties even after ageing.

## Claims

1. Composition comprising:
a) at least one aqueous resin composition of phenol-formaldehyde condensate, at least one alkali and/or alkaline earth hydroxide as well as at least one organic acid, selected from the group consisting of: C2 to C8-hydroxycarboxylic acids, in particular glycolic acid, citric acid, tartaric acid; aryl carboxylic acids with one or two six-membered rings; hydroxyl aryl carboxylic acids with one or two six-membered rings with 1 to 3 OH groups, in particular salicylic acid; polymer carboxylic acids, in particular polyacrylic acids, preferably polyacrylic acids having a molecular weight of 500 to 100.000 D; maleic acid-acrylic acid-copolymers, amino carboxylic acids, in particular ethylenediamintetraacetic acid (EDTA), ethylene glycol bis(2-aminoethylether)-N,N,N',N'-tetraacetic acid (EGTA);
b) at least one reaction retarding organic amine base; and
c) at least one reaction accelerating organic acid, selected from the group consisting of: C2 to C8-hydroxycarboxylic acids, in particular glycolic acid, citric acid, tartaric acid; aryl carboxylic acids with one or two six-membered rings; hydroxyl aryl carboxylic acids with one or two six-membered rings with 1 to 3 OH groups, in particular polyacrylic acids, preferably polyacrylic acids having a molecular weight of 500 to 100.000 D; maleic acid-acrylic acid-copolymers, amino carboxylic acids, in particular ethylenediamintetraacetic acid (EDTA), ethylene glycol bis(2-aminoethylether)-N,N,N',N'-tetraacetic acid (EGTA).

2. Composition according to claim 1, **characterized in that** said aqueous resin composition of phenol-formaldehyde condensate contains urea.

3. Composition according to claim 1 or 2, **characterized in that** said aqueous resin composition of phenol-formaldehyde condensate exhibits a pH value from 6.5 to 9.5, preferably 7.0 and 8.5.

4. Composition comprising:
a) at least one conventional aqueous resin composition made of phenol-formaldehyde-condensate with at least one alkali and/or alkaline earth hydroxide;
b) at least one reaction retarding organic amine base; and
c) at least one reaction accelerating organic acid, selected from the group consisting of: C2 to C8-hydroxycarboxylic acids, in particular glycolic acid, citric acid, tartaric acid; aryl carboxylic acids with one or two six-membered rings; hydroxy aryl carboxylic acids with one or two six-membered rings with 1 to 3 OH groups, in particular salicylic acids; polymer carboxylic acids, in particular polyacrylic acids, preferably polyacrylic acids having a molecular weight of 500 to 100.000 D; maleic acid-acrylic acid-copolymers, amino carboxylic acids, in particular ethylenediamintetraacetic acid (EDTA), ethylene glycol bis(2-aminoethylether)-N,N,N',N'-tetraacetic acid (EGTA).

5. Composition according to claim 1 or 4, **characterized in that** the amine base is selected from the group consisting of: Alkanolamines, in particular ethanolamine; as well as an amine compound of the general formula (1): 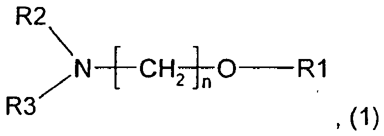 wherein R1, R2 and R3 are independently of one another equal or not equal to H and R1 of the general formula (2): 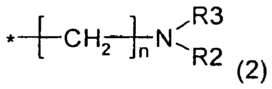 with a value for n of 2 - 10 and R2 and R3 independently of one another being equal to or not equal to H or corresponding to the general formula (3): 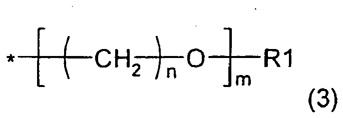 , wherein m can be a value of 1 - 50 and the molecular mass of the amine compound does not exceed approx. 20 000 g/mol.

6. Composition according to one of claims 1 or 4 to 5, **characterized in that** it additionally comprises at least one UV-stabilizer, selected from the group consisting of: Carboxylic acid amides of carboxylic acids with C2 to C16 alkyls or C5 to C16 cyclo- or heterocyclo alkyls, N-aryl substituted carboxylic acid amides with C5 to C6 ring, C1 to C16 N-alkyl substituted carboxylic acid amides, N-cyclo alkyl substituted carboxylic acid amides with a C5 to C16-membered ring; HALS- or NOR-HALS type radicals, in particular radicals of triacetonamine, triazines with sterically space-requiring substituents, in particular C5 to C6 aryl or C5 to C16 cycloalkyl, t-butyl; C5 to C6 diarylketones; diarylketones of condensed aryl compounds with 2 to 3 rings; as well as mixtures thereof;
or
the UV-stabilizer is selected from the group consisting of: 2-(2H-benzotriazole-2-yl)-4-methyl-(n)-dodecylphenol, isomers of 2-(2H-benzotriazole-2-yl)-4-methyl-(n)-tetracosylphenol, isomers of 2-(2H-benzotriazole-2-yl)-4-methyl-(n)-didodecylphenol (n = 5 or 6); 2,2,4,4-tetramethyl-2-oxa-3,20-diazadispiro-(5.1.11.2)-heneicosan-21-on; and 2-hydroxy-4-n-octoxy-benzophenone; as well as mixtures thereof.

7. Composition according to one of claims 1 or 4 to 6, **characterized in that** it is used as binder for mineral wool or glass fibres, in particular glass non-wovens.

8. Composition according to one of claims 1 or 4 to 7, **characterized in that** it is used as binder for ceramic powders, fibre reinforced products, in particular brake pads or abrasives.

9. Composition according to one of claims 1 or 4 to 8, **characterized in that** it contains a phenol-formaldehyde resin, comprising more than 0.2 mass percent of free formaldehyde.

10. Mineral wool product, **characterized in that** it is bound with a binder of a composition according to one of claims 1 or 4 to 9.

11. Mineral wool product according to claim 10, **characterized in that** it is formed as pipe shell, in particular one having a longitudinal slot.

## Patentansprüche

1. Zusammensetzung umfassend:
a) wenigstens eine wässrige Harzzusammensetzung aus Phenol-Formaldehyd-Kondensat, wenigstens ein Alkali und/oder Erdalkalihydroxid sowie wenigstens eine organische Säure, ausgewählt aus der Gruppe bestehend aus: C2 bis C8-Hydroxycarbonsäuren, insbesondere Glycolsäure, Zitronensäure, Weinsäure; Arylcarbonsäuren mit einem oder zwei Sechsringen; Hydroxyarylcarbonsäuren mit einem oder zwei Sechsringen mit 1 bis 3 OH-Gruppen, insbesondere Salicylsäure; polymere Carbonsäuren, insbesondere Polyacrylsäuren, vorzugsweise Polyacrylsäuren mit einer Molekularmasse von 500 bis 100.000 D; Maleinsäure-Acrylsäure-Copolymeren, Aminocarbonsäuren, insbesondere Ethylendiamintetraessigsäure (EDTA), Ethylenglycol bis(2-aminoethylether)-N,N,N',N'-tetraessigsäure (EGTA);
b) wenigstens eine reaktionsverzögernde organische Aminbase; und
c) wenigstens eine reaktionsbeschleunigende organische Säure, welche ausgewählt ist aus der Gruppe bestehend aus: C2 bis C8-Hydroxycarbonsäuren, insbesondere Glycolsäure, Citronensäure, Weinsäure; Arylcarbonsäuren mit einem oder zwei Sechsringen; Hydroxyarylcarbonsäuren mit einem oder zwei Sechsringen mit 1 bis 3 OH-Gruppen, insbesondere Polyacrylsäuren, vorzugsweise Polyacrylsäuren mit einer Molekularmasse von 500 bis 100.000 D; Maleinsäure-Acrylsäure-Copolymere, Aminocarbonsäuren, insbesondere Ethylendiamin-tetraessigsäure (EDTA), Ethylenglycol bis(2-aminoethylether)-N,N,N',N'-tetraessigsäure (EGTA).

2. Zusammensetzung nach Anspruch 1, **dadurch gekennzeichnet, dass** die wässrige Harzzusammensetzung aus Phenol-Formaldehyd-Kondensat Harnstoff enthält.

3. Zusammensetzung nach Anspruch 1 oder 2, **dadurch gekennzeichnet, dass** die wässrige Harzzusammensetzung aus Phenol-Formaldehyd-Kondensat einen pH-Wert zwischen 6,5 bis 9,5 bevorzugt 7,0 und 8,5 aufweist.

4. Zusammensetzung umfassend:
a) wenigstens eine wässrige Harzzusammensetzung aus Phenol-Formaldehyd-Kondensat mit wenigstens einem Alkali und/oder Erdalkalihydroxid;
b) wenigstens eine reaktionsverzögernde organische Aminbase; und
c) wenigstens eine reaktionsbeschleunigende organische Säure, welche ausgewählt ist aus der Gruppe bestehend aus: C2 bis C8-Hydroxycarbonsäuren, insbesondere Glycolsäure, Citronensäure, Weinsäure; Arylcarbonsäuren mit einem oder zwei Sechsringen; Hydroxyarylcarbonsäuren mit einem oder zwei Sechsringen mit 1 bis 3 OH-Gruppen, insbesondere Salicylsäuren; polymere Carbonsäuren, insbesondere Polyacrylsäuren, vorzugsweise Polyacrylsäuren mit einer Molekularmasse von 500 bis 100.000 D; Maleinsäure-Acrylsäure-Copolymeren, Aminocarbonsäuren, insbesondere Ethylendiamintetraessigsäure (EDTA), Ethylenglycol bis(2-aminoethylether)-N,N,N',N'-tetraessigsäure (EGTA).

5. Zusammensetzung nach Anspruch 1 oder 4, **dadurch gekennzeichnet, dass** die Aminbase ausgewählt ist aus der Gruppe, bestehend aus: Alkanolaminen, insbesondere Ethanolamin; sowie einer Aminverbindung mit der allgemeinen Formel (1): 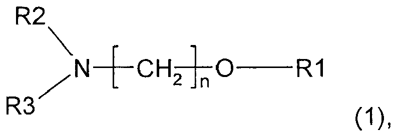 worin R1, R2 und R3 unabhängig voneinander gleich oder verschieden sind zu H und R1 der allgemeinen Formel (2) entspricht: 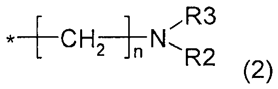 mit einem Wert für n von 2 - 10 und R2 und R3 unabhängig voneinander gleich oder verschieden sind zu H oder der allgemeinen Formel (3) entsprechen: 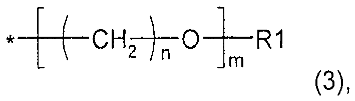 wobei m einen Wert von 1 - 50 annehmen kann; und die Molekularmasse der Amin-Verbindung ungefähr 20 000 g/mol nicht übersteigt.

6. Zusammensetzung nach einem der Ansprüche 1 oder 4 bis 5, **dadurch gekennzeichnet, dass** sie zusätzlich wenigstens einen UV-Stabilisator umfasst, welcher ausgewählt ist aus der Gruppe bestehend aus: Carbonsäureamiden aus Carbonsäuren mit C2 bis C16 Alkylen oder C5 bis C16 Cyclo- oder Heterocycloalkylen, N-arylsubstituierten Carbonsäureamiden mit C5 bis C6-Ring, C1 bis C16 N-alkylsubstituierten Carbonsäureamiden, N-cycloalkylsubstituierten Carbonsäureamide mit einem C5 bis C16-gliedrigen Ring; Radikalen vom HALS-oder NOR-HALS-Typ, insbesondere Radikale des Triacetonamins, Triazinen mit sterisch raumfordernden Substituenten, insbesondere C5 bis C6 Aryl oder C5 bis C16 Cycloalkyl, t-Butyl; C5 bis C6 Diarylketonen; Diarylketonen von kondensierten Arylverbindungen mit 2 bis 3 Ringen; sowie deren Mischungen;
oder
der UV-Stabilisator ausgewählt ist aus der Gruppe bestehend aus: 2-(2H-Benzotriazol-2-yl)-4-methyl-(n)-dodecylphenol, Isomeren von 2-(2H-Benzotriazol-2-yl)-4-methyl-(n)-tetracosylphenol, Isomeren von 2-(2H-Benzotriazol-2-yl)-4-methyl-(n)-didodecylphenol (n = 5 oder 6); 2,2,4,4-Tetramethyl-2-oxa-3,20-diazadispiro-(5.1.11.2)-heneicosan-21-on; und 2-Hydroxy-4-n-octoxy-benzophenon; sowie deren Mischungen.

7. Zusammensetzung nach einem der Ansprüche 1 oder 4 bis 6, **dadurch gekennzeichnet, dass** sie als Bindemittel für Mineralwolle oder Glasfasern, insbesondere Glasvliese, eingesetzt wird.

8. Zusammensetzung nach einem der Ansprüche 1 oder 4 bis 7, **dadurch gekennzeichnet, dass** sie als Bindemittel für keramische Pulver, faserverstärkte Produkte, insbesondere Bremsbeläge oder Schleifmittel, eingesetzt wird.

9. Zusammensetzung nach einem der Ansprüche 1 oder 4 bis 8, **dadurch gekennzeichnet, dass** sie ein Phenolformaldehydharz enthält, welches mehr als 0,2 Masse-% an freiem Formaldehyd enthält.

10. Mineralwolleprodukt, **dadurch gekennzeichnet, dass** es mit einem Bindemittel aus einer Zusammensetzung gemäß einem der Ansprüche 1 oder 4 bis 9 gebunden ist.

11. Mineralwolleprodukt nach Anspruch 10, **dadurch gekennzeichnet, dass** es als Rohrschale, insbesondere eine solche mit einem Längsschlitz ausgebildet ist.

## Revendications

1. Composition comprenant :
a) au moins une composition de résine aqueuse de type condensat de phénol-formaldéhyde, au moins un hydroxyde alcalin et/ou alcalinoterreux ainsi qu'au moins un acide organique, choisi dans le groupe constitué par : les acides hydroxycarboxyliques C2 à C8, en particulier l'acide glycolique, l'acide citrique, l'acide tartrique ; les acides arylcarboxyliques ayant un ou deux cycles à six chaînons ; les acides hydroxyarylcarboxyliques ayant un ou deux cycles à six chaînons contenant de 1 à 3 groupes OH, en particulier l'acide salicylique ; les acides carboxyliques polymères, en particulier les acides polyacryliques, de préférence les acides polyacryliques ayant un poids moléculaire de 500 à 100 000 D ; les copolymères d'acide maléique-acide acrylique, les acides amino-carboxyliques, en particulier l'acide éthylène diamine tétraacétique (EDTA), et l'acide éthylène glycol bis(2-amino-éthyléther)-N,N,N',N'-tétraacétique (EGTA) ;
b) au moins une base de type amine organique retardant la réaction ; et
c) au moins un acide organique accélérant la réaction, choisi dans le groupe constitué par : les acides hydroxycarboxyliques C2 à C8, en particulier l'acide glycolique, l'acide citrique, l'acide tartrique ; les acides arylcarboxyliques ayant un ou deux cycles à six chaînons ; les acides hydroxyaryl-carboxyliques ayant un ou deux cycles à six chaînons contenant de 1 à 3 groupes OH, en particulier les acides polyacryliques, de préférence les acides polyacryliques ayant un poids moléculaires de 500 à 100 000 D ; les copolymères d'acide maléique-acide acrylique, les acides aminocarboxyliques, en particulier l'acide éthylène diaminetétraacétique (EDTA), et l'acide éthylène glycol bis(2-amino-éthyléther)-N,N,N',N'-tétra-acétique (EGTA).

2. Composition selon la revendication 1, **caractérisée en ce que** ladite composition de résine aqueuse de type condensat de phénol-formaldéhyde contient de l'urée.

3. Composition selon la revendication 1 ou 2, **caractérisée en ce que** ladite composition de résine aqueuse de type condensat de phénol-formaldéhyde présente une valeur de pH de 6, 5 à 9, 5, de préférence de 7,0 à 8, 5.

4. Composition comprenant :
a) au moins une composition de résine aqueuse classique à base d'un condensat de phénol-formaldéhyde et d'au moins un hydroxyde alcalin et/ou alcalinoterreux ;
b) au moins une base de type amine organique retardant la réaction ; et
c) au moins un acide organique accélérant la réaction, choisi dans le groupe constitué par : les acides hydroxycarboxyliques C2 à C8, en particulier l'acide glycolique, l'acide citrique, l'acide tartrique ; les acides arylcarboxyliques ayant un ou deux cycles à six chaînons ; les acides hydroxyarylcarboxyliques ayant un ou deux cycles à six chaînons contenant de 1 à 3 groupes OH, en particulier les acides salicyliques ; les acides carboxyliques polymères, en particulier les acides polyacryliques, de préférence les acides polyacryliques ayant un poids moléculaires de 500 à 100 000 D ; les copolymères d'acide maléique-acide acrylique, les acides amino-carboxyliques, en particulier l'acide éthylène diamine tétraacétique (EDTA), et l'acide éthylène glycol bis(2-aminoéthyléther)-N,N,N',N'-tétraacétique (EGTA).

5. Composition selon la revendication 1 ou 4, **caractérisée en ce que** la base de type amine est choisie dans le groupe constitué par : les alcanolamines, en particulier l'éthanolamine ; ainsi qu'un composé d'amine de formule générale (1) : 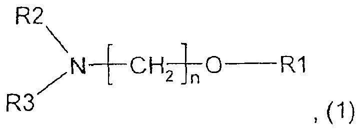 dans laquelle R1, R2 et R3 sont indépendamment les uns des autres égaux ou pas à H et R1 de formule générale (2) : 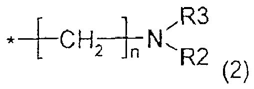 ayant une valeur n de 2 à 10 et R2 et R3 indépendamment l'un de l'autre étant égaux ou pas à H ou correspondant à la formule générale (3) : 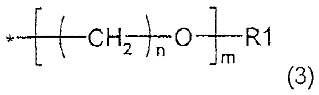 dans laquelle m peut avoir une valeur de 1 à 50 et le poids moléculaire du composé d'amine n'excède pas env. 20 000 g/mol.

6. Composition selon l'une quelconque des revendications 1 ou 4 à 5, **caractérisée en ce qu'**elle comprend en plus au moins un stabilisant UV, choisi dans le groupe constitué par : les amides d'acides carboxyliques des acides carboxyliques contenant des alkyles C2 à C16 ou des cycloalkyles ou hétérocycloalkyles C5 à C16, les amides d'acides carboxyliques substitués par un N-aryle contenant un cycle C5 à C6, les amides d'acides carboxyliques substitués par un N-alkyle C1 à C16, les amides d'acides carboxyliques substitués par un N-cycloalkyle contenant un cycle à C5 à C16 chaînons ; les radicaux de type HALS- ou NOR-HALS, en particulier les radicaux de triacétonamine, les triazines portant des substituants exigeant des espaces stériques, en particulier aryle C5 à C6 ou cycloalkyle C5 à C16, t-butyle ; les diarylcétones C5 à C6 ; les diarylcétones de composés d'aryle condensés contenant 2 à 3 cycles ; ainsi que leurs mélanges ;
ou
le stabilisant UV est choisi dans le groupe constitué par : le 2-(2H-benzotriazol-2-yl)-4-méthyl-(n)-dodécylphénol, les isomères du 2-(2H-benzotriazol-2-yl)-4-méthyl-(n)-tétracosyl-phénol, les isomères du 2-(2H-benzotriazol-2-yl)-4-méthyl-(n)-didodécylphénol (n = 5 ou 6) ; la 2,2,4,4-tétraméthyl-2-oxa-3,20-diazadispiro-(5.1.11.2)-heneicosan-21-one ; et la 2-hydroxy-4-n-octoxy-benzophénone ; ainsi que leurs mélanges.

7. Composition selon l'une quelconque des revendications 1 ou 4 à 6, **caractérisée en ce qu'**elle est utilisée à titre de liant pour la laine minérale ou les fibres de verre, en particulier les non-tissés en fibres de verre.

8. Composition selon l'une quelconque des revendications 1 ou 4 à 7, **caractérisée en ce qu'**elle est utilisée à titre de liant pour les poudres céramiques, les produits renforcés par des fibres, en particulier les plaquettes de frein ou les abrasifs.

9. Composition selon l'une quelconque des revendications 1 ou 4 à 8, **caractérisée en ce qu'**elle contient une résine phénol-formaldéhyde, comprenant plus de 0,2 % en poids de formaldéhyde libre.

10. Produit de laine minérale, **caractérisé en ce qu'**il est lié à l'aide d'un liant constitué par une composition selon l'une quelconque des revendications 1 ou 4 à 9.

11. Produit de laine minérale selon la revendication 10, **caractérisé en ce qu'**il est mis en forme sous la forme d'une chemise de tuyau, en particulier du type comportant une fente longitudinale.
